# EUROPEAN PATENT SPECIFICATION

(11) **EP 3 309 476 B1**
(45) Date of publication and mention of the grant of the patent: **28.08.2019**
(21) Application number: 16904240.5
(22) Date of filing: 25.07.2016
(51) Int. Cl.: F25B 41/00, F15D 1/02, F24D 3/10, F24D 3/18

(54) **DISTRIBUTOR AND REFRIGERATION CYCLE APPARATUS**
VERTEILER UND KÜHLKREISVORRICHTUNG
DISTRIBUTEUR ET APPAREIL À CYCLE FRIGORIFIQUE

(43) Date of publication of application: 18.04.2018
(73) Proprietor: MITSUBISHI ELECTRIC CORPORATION, Chiyoda-ku Tokyo 100-8310 (JP)
(72) Inventor: KAWAMURA, Takeshi, Tokyo 102-0073 (JP); HASEGAWA, Yuki, Tokyo 102-0073 (JP)
(74) Representative: Pfenning, Meinig & Partner mbB
(86) International application number: PCT/JP2016/071766
(87) International publication number: WO 2018/020557

(56) References cited:
- EP-A1- 1 566 595
- EP-A1- 2 014 992
- WO-A1-97/08498
- WO-A1-2016/075676
- JP-A- H03 274 327
- JP-A- 2002 250 526
- JP-A- 2002 250 526
- JP-A- 2005 069 368
- JP-A- 2005 127 586
- JP-U- S5 510 946

## Description

### Technical Field

The present invention relates to a distributor that distributes fluid among a plurality of units and to a refrigeration cycle apparatus including the distributor.

### Background Art

Various refrigeration cycle apparatuses including units such as an outdoor unit and units such as an indoor unit have been proposed. Such refrigeration cycle apparatuses are used as air-conditioning apparatuses, hot-water supply devices, or other apparatuses. Some air-conditioning apparatuses have a distributor (header) that connects a plurality of indoor units to a single outdoor unit and distributes fluid from the outdoor-unit side to the indoor-unit side to be circulated. As such an air-conditioning apparatus, a hot-water heating header as disclosed in, for example, Patent Literature 1 has been proposed.

The hot-water heating header disclosed in Patent Literature 1 includes a hot-water supply-pipe header to which hot-water supply pipes (outgoing pipes), through which hot water is supplied to load units (indoor units), are connected, and a hot-water return header to which hot-water return pipes (return pipes), through which the hot water used in the load units returns to a heat source unit (hot water tank), are connected.

### Citation List

### Patent Literature

Patent Literature 1: Japanese Unexamined Utility Model Application Publication No. 57-16708

### Summary of Invention

### Technical Problem

The hot-water heating header disclosed in Patent Literature 1 has a circuit configuration in which the hot-water supply header and the hot-water return header form a double-pipe structure, and the hot-water supply header is provided with a bypass hole that communicates between the hot-water supply header and the hot-water return header.

However, in the circuit configuration in Patent Literature 1, because the hot-water supply header and the hot-water return header form a double-pipe structure, fluid may be short-cycled particularly at load-unit-side outgoing and returning ports that are located at positions away from heat-source-unit-side outgoing and returning ports.

Furthermore, in the circuit configuration in Patent Literature 1, also when load-unit-side outgoing and returning circuits that are located at positions away from the heat-source-unit-side outgoing and returning ports are not used, the fluid may accidentally flow into a load unit side.

Moreover, in Patent Literature 1, when the inside diameter of the bypass hole is larger than or equal to the diameter of the outgoing ports, the fluid may also be short-cycled at the heat-source side.

In addition, in Patent Literature 1, because the hot-water supply header and the hot-water return header form a double-pipe structure, the fluid flowing through the hot-water supply header and the fluid flowing through the hot-water return header exchange heat, decreasing the heat exchange efficiency.

A further distributor is disclosed in document WO 97/08498 A1 comprising the features of the preamble of claim 1.

The present invention has been made in view of the above-described problems, and an object of the present invention is to provide a distributor that is configured to prevent short cycling of fluid, and a refrigeration cycle apparatus including such a distributor.

### Solution to Problem

A distributor according to one embodiment of the present invention is defined comprising the features of claim 1.

A refrigeration cycle apparatus according to one embodiment of the present invention includes a heat source unit, a plurality of load-side units, and the above-described distributor that is connected between the heat source unit and the plurality of load-side units.

### Advantageous Effects of Invention

With the distributor according to one embodiment of the present invention, the second return pipe is connected to the return-side header, on the downstream side in the direction in which the fluid returning from the at least two first return pipes flows, at the opposite side, across the longitudinal direction of the return-side header, from the connecting positions of the at least two first return pipes to the return-side header. Thus, the fluid flow is not inhibited in the return-side header, and short cycling of fluid does not occur in fluid-distribution-side circuits.

Because the refrigeration cycle apparatus according to one embodiment of the present invention uses the above-described distributor, short cycling of fluid does not occur in the fluid-distribution-side circuits, and thus, a decline in efficiency due to the short cycling of fluid does not occur.

### Brief Description of Drawings

Fig. 1 is a perspective view showing an example configuration of a distributor according to Embodiment 1 of the present invention.
Fig. 2 is a circuit diagram schematically showing an example circuit configuration of a refrigeration cycle apparatus according to Embodiment 2 of the present invention.

### Description of Embodiments

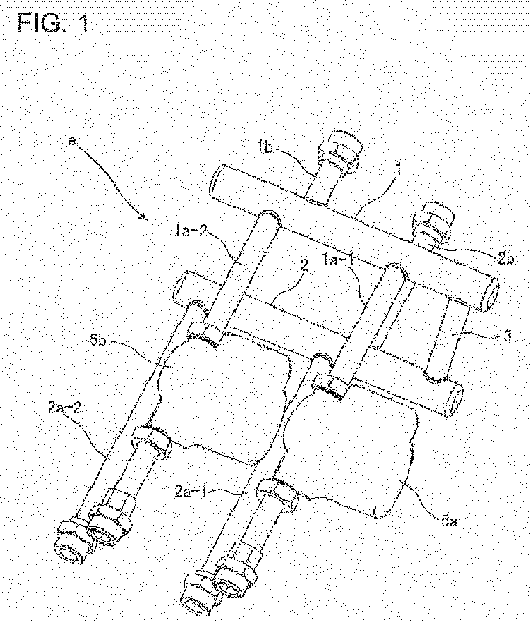

Embodiments of the present invention will be described below with reference to the drawings where appropriate. Note that, in the drawings below, including Fig. 1, the component-size relationships may differ from actual ones. Furthermore, in the drawings below, including Fig. 1, the components denoted by the same reference signs are the same or corresponding components, and the same reference signs apply to the overall specification. Moreover, the configurations of the components described in the overall specification are merely examples and are not limited by these descriptions.

### Embodiment 1

Fig. 1 is a perspective view showing an example configuration of a distributor e according to Embodiment 1 of the present invention. The distributor e will be described with reference to Fig. 1.

The distributor e is connected between at least one outdoor unit and a plurality of indoor units, which together constitute a refrigeration cycle apparatus, such as an air-conditioning apparatus. The distributor e distributes fluid among the plurality of indoor units.

Note that, in the description below, a side of an outdoor unit, serving as a heat source unit, will be referred to as a fluid supply side, and a side of indoor units, serving as load units, will be referred to as a fluid distribution side.

As shown in Fig. 1, the distributor e includes an outgoing-side header 1 for distributing fluid, and a return-side header 2 for merging the fluid. The outgoing-side header 1 and the return-side header 2 are disposed such that, for example, the directions in which the fluid flows, that is, their longitudinal directions, are parallel to each other. Furthermore, the outgoing-side header 1 and the return-side header 2 are connected by a bypass pipe 3.

The bypass pipe 3 connects one end side of the outgoing-side header 1 and one end side of the return-side header 2. More specifically, the bypass pipe 3 connects the outgoing-side header 1 and the return-side header 2 at their side surfaces at the right end sides in Fig. 1. The bypass pipe 3 extends linearly and connects the opposing positions of the outgoing-side header 1 and the return-side header 2. The inside diameter of the bypass pipe 3 is smaller than the inside diameter of each of the outgoing pipes connected to the outgoing-side header 1 and the return pipes connected to the return-side header 2. This configuration can make a fluid in the bypass pipe 3 less likely to flow than fluid flowing in the outgoing pipes. This configuration can reduce the occurrence of short cycling of fluid at the fluid supply side and backflow of fluid at the fluid distribution side.

The plurality of outgoing pipes are connected to the outgoing-side header 1. Of the plurality of outgoing pipes, at least two outgoing pipes connected to the fluid distribution side include a first outgoing pipe 1a-1 and a first outgoing pipe 1a-2. Of the plurality of outgoing pipes, at least one outgoing pipe connected to the fluid supply side includes a second outgoing pipe 1b.

The first outgoing pipe 1a-1 and the first outgoing pipe 1a-2 are disposed in parallel to each other to the outgoing-side header 1. Meanwhile, the second outgoing pipe 1b is connected at the opposite side from the first outgoing pipe 1a-1 and the first outgoing pipe 1a-2, between the connecting position of the first outgoing pipe 1a-1 and the connecting position of the first outgoing pipe 1a-2.

Note that what is meant by that the second outgoing pipe 1b is at the opposite side from the first outgoing pipe 1a-1 and the first outgoing pipe 1a-2 is that the connecting position of the second outgoing pipe 1b is located at the opposite side from the connecting positions of the first outgoing pipe 1a-1 and the first outgoing pipe 1a-2.

Furthermore, the first outgoing pipe 1a-1 is provided with a pump 5a for circulating the fluid. Similarly, the first outgoing pipe 1a-2 is provided with a pump 5b for circulating the fluid.

A plurality of return pipes are connected to the return-side header 2. Of the plurality of return pipes, at least two return pipes connected to the fluid distribution side include a first return pipe 2a-1 and a first return pipe 2a-2. Of the plurality of return pipes, at least one return pipe connected to the fluid supply side includes a second return pipe 2b.

The first return pipe 2a-1 and the first return pipe 2a-2 are disposed in parallel to each other to the return-side header 2. Meanwhile, the second return pipe 2b is connected at the opposite side from the first return pipe 2a-1 and the first return pipe 2a-2, at a position farthest from the first return pipe 2a-2 among all of the return pipes connected to the fluid distribution side.

Note that what is meant by that the second return pipe 2b is at the opposite side from the first return pipe 2a-1 and the first return pipe 2a-2 is that the connecting position of the second return pipe 2b is located at the opposite side from the connecting positions of the first return pipe 2a-1 and the first return pipe 2a-2.

Furthermore, the pump 5a may be provided not in the first outgoing pipe 1a-1, but in the first return pipe 2a-1, and the pump 5b may be provided not in the first outgoing pipe 1a-2, but in the first return pipe 2a-2.

Although an example case where the distributor e separates the fluid into two is shown here, the number into which the fluid is separated is not specifically limited. Even in the case where the fluid is separated into three or more, the second return pipe 2b is connected at a position closest to the outgoing-side header 1 among the connecting positions of all of the return pipes, that is, on the downstream side in the direction in which the fluid returning from the first return pipes flows, at the opposite side from the connecting positions of the first return pipes to the return-side header 2 across the longitudinal direction of the return-side header 2. This configuration does not inhibit the fluid flow in the return-side header 2.

As described above, in the distributor e, the connecting position, in the return-side header 2, of the return pipe that is connected to the fluid supply side (i.e., the second return pipe 2b) is closer to the outgoing-side header 1 than are the connecting positions, in the return-side header 2, of the return pipes that are connected to the fluid distribution side (i.e., the first return pipe 2a-1 and the first return pipe 2a-2). Hence, the fluid flow is not inhibited in the return-side header 2, and short cycling of fluid does not occur in the fluid-distribution-side circuits.

Furthermore, by configuring the distributor e as above, the distance between the outgoing-side header 1 and the return-side header 2 is reduced, thus contributing to a reduction in size of the distributor e. Furthermore, by configuring the distributor e as above, a component such as a check valve is unnecessary, thus achieving a simple circuit configuration. Consequently, the distributor e enables space-saving installation.

### Embodiment 2

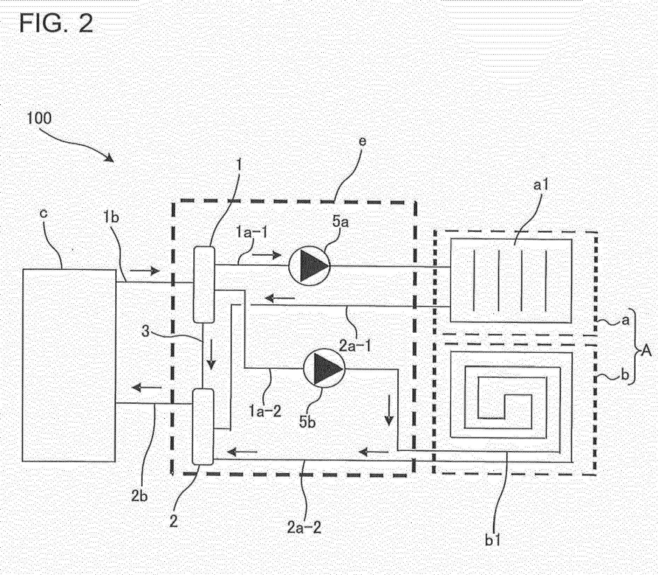

Fig. 2 is a circuit diagram schematically showing an example circuit configuration of a refrigeration cycle apparatus 100 according to Embodiment 2 of the present invention. The refrigeration cycle apparatus 100 will be described with reference to Fig. 2. Note that, in Embodiment 2, an air-conditioning apparatus, serving as an example of the refrigeration cycle apparatus 100, will be described. Furthermore, in Fig. 2, flows of fluid, such as refrigerant and water, are shown by arrows. In the following description, the fluid, such as refrigerant and water, supplied from the heat source unit c to the distributor e will be referred to as fluid without distinction.

### <Configuration of Refrigeration Cycle Apparatus 100>

The refrigeration cycle apparatus 100 includes, as one component, the distributor e according to the above-described Embodiment 1. More specifically, as shown in Fig. 1, the refrigeration cycle apparatus 100 includes one heat source unit c, a plurality of load-side units A (a load-side unit a and a load-side unit b), and the distributor e. Although Fig. 1 shows an example case where one heat source unit c is provided, the number of the heat source units c is not specifically limited, and a plurality of heat source units c may be provided in series or in parallel to be connected to the distributor e. Furthermore, although Fig. 1 shows an example case where two load-side units A, namely, the load-side unit a and the load-side unit b, are connected, three or more load-side units may be connected in parallel to the distributor e.

### (Heat Source Unit c)

The heat source unit c is used as, for example, an outdoor unit, depending on the purpose of the refrigeration cycle apparatus 100, and supplies heat to the load-side units A via the fluid. This heat source unit c is the fluid supply side described in Embodiment 1.

The heat source unit c accommodates a compressor, an expansion device, a heat-source-side heat exchanger, a fan, and other components, although they are not illustrated.

When these components are connected by pipes to load-side heat exchangers accommodated in the load-side units A, these components and the load-side heat exchangers form a refrigerant circuit. In this case, the heat source is stored in the refrigerant, which is the fluid, and is supplied from the heat source unit c to the load-side units A.

Alternatively, besides the heat-source-side heat exchanger, another heat exchanger may be provided in the heat source unit c to indirectly supply the heat source to the load-side units A. In this case, the heat source is stored in the water or other medium, which is the fluid, and is supplied to the load-side units A. In other words, the heat source stored in the refrigerant in the heat source unit c may be transmitted to another fluid, such as water, via another heat exchanger, and then this fluid may be supplied to the load-side units A.

Note that, depending on the configuration of the heat-source-side heat exchanger, not the fan, but a pump that circulates water or antifreeze liquid is accommodated, as a heat-medium delivery device, in the heat source unit c.

### (Load-side Unit A)

Depending on the purpose of the refrigeration cycle apparatus 100, the load-side units A are used as, for example, indoor units or hot-water supply units, and heat or cool air, water or other load-side target, with the heat source supplied from the heat source unit c via the fluid. These load-side units A are the fluid distribution side described in Embodiment 1.

The load-side units A accommodate the load-side heat exchangers, fans, and other components.

Note that, depending on the configuration of the load-side heat exchangers, not the fans, but pumps that circulate water or antifreeze liquid are accommodated, as heat-medium delivery devices, in the load-side units A.

Furthermore, the load-side heat exchanger accommodated in the load-side unit a will be referred to as a load-side heat exchanger a1, and the load-side heat exchanger accommodated in the load-side unit b will be referred to as a load-side heat exchanger b1.

Moreover, when the load-side unit a and the load-side unit b do not have to be distinguished from one another, they will be referred to as the load-side units A in the description.

### (Distributor e)

The distributor e is connected between the heat source unit c and the load-side units A and distributes the fluid supplied from the heat source unit c among the load-side units A to be circulated.

The configuration of the distributor e has been described in Embodiment 1.

### <Operation of Refrigeration Cycle Apparatus 100>

First, the operation of the refrigeration cycle apparatus 100 when both the load-side unit a and the load-side unit b are used will be described.

In this case, the fluid supplied from the heat source unit c passes through the second outgoing pipe 1b and flows into the outgoing-side header 1 of the distributor e. The fluid flowing into the outgoing-side header 1 is separated into fluid flowing through the first outgoing pipe 1a-1 and fluid flowing through the first outgoing pipe 1a-2.

The fluid flowing through the first outgoing pipe 1a-1 flows into the load-side heat exchanger a1 of the load-side unit a, and, in the load-side heat exchanger a1, heats or cools the load-side target, such as air, water, and other heat medium, through heat exchange.

The fluid flowing through the first outgoing pipe 1a-2 flows into the load-side heat exchanger b1 of the load-side unit b and, in the load-side heat exchanger b1, heats or cools the load-side target, such as air, water, and other heat medium, through heat exchange.

The fluids that have exchanged heat with the heat medium in the load-side heat exchanger a1 and the load-side heat exchanger b1 flow out from the load-side unit a and the load-side unit b.

The fluid flowing out from the load-side unit a passes through the first return pipe 2a-1 and flows into the return-side header 2 of the distributor e.

The fluid flowing out from the load-side unit b passes through the first return pipe 2a-2 and flows into the return-side header 2 of the distributor e.

The fluids flowing into the return-side header 2 are merged, pass through the second return pipe 2b, and return to the heat source unit c.

When the load-side unit a is used, the fluid returning from the load-side unit a flows through the first return pipe 2a-1 into the return-side header 2. The fluid flowing into the return-side header 2 is guided to the second return pipe 2b, which is located immediately after the first return pipe 2a-1, that is, at the opposite side from the first return pipe 2a-1. Then, the fluid returns to the heat source unit c. Consequently, with the distributor e, because the fluid flowing into the return-side header 2 via the first return pipe 2a-1 returns to the heat source unit c via the second return pipe 2b, the fluid smoothly flows in the return-side header 2, and thus, the fluid is not short-cycled in the circuit of the load-side unit a.

Furthermore, also when the load-side unit b is used, the fluid returning from the load-side unit b flows through the first return pipe 2a-2 into the return-side header 2. The fluid flowing into the return-side header 2 is guided to the second return pipe 2b, which is located at the opposite side from the first return pipe 2a-2. Then, the fluid returns to the heat source unit c. Consequently, with the distributor e, because the fluid flowing into the return-side header 2 via the first return pipe 2a-2 also returns to the heat source unit c via the second return pipe 2b, the fluid smoothly flows in the return-side header 2, and thus, the fluid is not short-cycled in the circuit of the load-side unit a.

When both the load-side unit a and the load-side unit b are used, the fluids returning from the load-side unit a and the load-side unit b flow, respectively, through the first return pipe 2a-1 and the first return pipe 2a-2 into the return-side header 2. The fluids flowing into the return-side header 2 are merged and guided to the second return pipe 2b, which is located at the opposite side from the first return pipe 2a-1 and the first return pipe 2a-2. Then, the fluid returns to the heat source unit c. Consequently, with the distributor e, because the fluid merged in the return-side header 2 smoothly returns to the heat source unit c via the second return pipe 2b, the fluid is not blocked in the return-side header 2, and thus, the fluid is not short-cycled in the circuit of the load-side unit a.

Next, the operation of the refrigeration cycle apparatus 100 when only one of the load-side unit a and the load-side unit b is used will be described. Here, an example case where the load-side unit a is used and the load-side unit b is not used will be described.

In this case, the fluid supplied from the heat source unit c passes through the second outgoing pipe 1b and flows into the outgoing-side header 1 of the distributor e. The fluid flowing into the outgoing-side header 1 is guided to the first outgoing pipe 1a-1. More specifically, in this case, only the pump 5a is driven, and the pump 5b is stopped. Hence, the fluid flowing into the outgoing-side header 1 is guided only to the first outgoing pipe 1a-1.

The fluid flowing through the first outgoing pipe 1a-1 flows into the load-side heat exchanger a1 of the load-side unit a, and, in the load-side heat exchanger a1, heats or cools the load-side target, such as air, water, and other heat medium, through heat exchange.

The fluid that has exchanged heat with the heat medium in the load-side heat exchanger a1 flows out from the load-side unit a.

The fluid flowing out from the load-side unit a passes through the first return pipe 2a-1 and flows into the return-side header 2 of the distributor e.

The fluid flowing into the return-side header 2 returns to the heat source unit c through the second return pipe 2b.

When only one of the load-side unit a and the load-side unit b is used, because the connecting position of the second return pipe 2b is closer to the outgoing-side header 1 than are the connecting positions of the first return pipe 2a-1 and the first return pipe 2a-2, as viewed from the heat source unit c side, it is possible to prevent backflow of fluid to the load-side unit that is not used.

Now, a case is assumed that a certain load-side unit is frequently used and opening and closing of a circuit are frequently repeated. Herein, an example case where the load-side unit b is such a frequently used load-side unit, in which opening and closing of the circuit are frequently repeated will be described. Note that the frequencies of use of the load-side units A are set when the refrigeration cycle apparatus 100 is installed. Furthermore, what is meant by "frequently used" is that it is preliminarily assumed that the frequency of use will be high, depending on the purpose of the load-side unit connected. The purposes of the load-side units include air conditioning for habitable rooms, air conditioning for warehouses, air conditioning for shared spaces, floor heating, and hot-water supply.

The first return pipe 2a-2 connecting the load-side unit b and the return-side header 2 is connected to the return-side header 2, at a position farthest from the second return pipe 2b among all of the return pipes connected to the load-side units A. With this configuration, even in the case where the load-side unit b is frequently used, and opening and closing of the circuit are frequently repeated, a fluid flow is not inhibited in the return-side header 2, and thus, the fluid is not short-cycled in the load-side unit b, and backflow of fluid from the heat source unit c side does not occur.

As described above, because the refrigeration cycle apparatus 100 includes the distributor e as a component, it is possible to prevent the occurrence of short cycling in load-side-unit-side circuits, with a simple pipe configuration that does not require a part such as a check valve.

Furthermore, because the refrigeration cycle apparatus 100 is configured such that the inside diameter of the bypass pipe 3 is smaller than the inside diameter of each of the outgoing-side header 1 and the return-side header 2, it is possible to prevent short cycling of fluid from occurring in the load-side-unit-side circuits.

Moreover, in the refrigeration cycle apparatus 100, because the second return pipe 2b is connected at a position closest to the heat source unit c side among all of the return pipes, even during an operation in which not all the load-side units are used, backflow of fluid to the load-side-unit-side circuits does not occur.

### Reference Signs List

1 outgoing-side header 1a-1 first outgoing pipe 1a-2 first outgoing pipe 1b second outgoing pipe 2 return-side header 2a-1 first return pipe 2a-2 first return pipe 2b second return pipe 3 bypass pipe 5a pump 5b pump 100 refrigeration cycle apparatus A load-side unit a load-side unit a1 load-side heat exchanger b load-side unit b1 load-side heat exchanger c heat source unit e distributor

## Claims

1. A distributor (e) comprising:
an outgoing-side header (1) to which a plurality of outgoing pipes (1a-1, 1a-2, 1b) are connected;
a return-side header (2) to which a plurality of return pipes (2a-1, 2a-2, 2b) are connected; and
the plurality of outgoing pipes (1a-1, 1a-2, 1b) including at least two first outgoing pipes (1a-1, 1a-2) connected to a fluid distribution side and a second outgoing pipe (1b) connected to a fluid supply side,
the plurality of return pipes (2a-1, 2a-2, 2b) including at least two first return pipes (2a-1, 2a-2) connected to the fluid distribution side and a second return pipe (2b) connected to the fluid supply side,
the at least two first outgoing pipes (1a-1, 1a-2) being each provided with a pump (5a, 5b), or the at least two first return pipes (2a-1, 2a-2) being each provided with a pump (5a, 5b),
the outgoing-side header (1) and the return-side header (2) being disposed to be parallel to each other in the longitudinal direction,
the second return pipe (2b) being connected at a position closer to the outgoing-side header (1) than are the connecting positions of the at least two first return pipes (2a-1, 2a-2) to the return-side header (2),
the second outgoing pipe (1b) being connected to the outgoing-side header (1) between connecting positions of the at least two first outgoing pipes (1a-1, 1a-2) in the longitudinal direction of the outgoing-side header (1), **characterized in that** the second return pipe (2b) being connected to the return-side header (2), on a downstream side in a direction in which fluid returning from the at least two first return pipes (2a-1, 2a-2) flows, and at an opposite side, across a longitudinal direction of the return-side header (2), from connecting positions of the at least two first return pipes (2a-1, 2a-2) to the return-side header and
the distributor further comprises a bypass pipe (3) connecting the outgoing-side header (1) and the return-side header (2) wherein an inside diameter of the bypass pipe (3) being smaller than an inside diameter of each of the at least two first outgoing pipes (1a-1, 1a-2), the second outgoing pipe (1b), the at least two first return pipes (2a-1, 2a-2), and the second return pipe (2b).

2. The distributor (e) of claim 1, wherein the at least two first outgoing pipes (1a-1, 1a-2) are connected in parallel to each other to the outgoing-side header (1), at an opposite side from a connecting position of the second outgoing pipe (1b) to the outgoing-side header (1).

3. The distributor (e) of claim 1 or 2, wherein the at least two first return pipes (2a-1, 2a-2) are connected in parallel to each other to the return-side header (2), at an opposite side from a connecting position of the second return pipe (2b) to the return-side header (2).

4. A refrigeration cycle apparatus (100) comprising:
a heat source unit (c);
a plurality of load-side units (a, b); and
the distributor (e) of any one of claims 1 to 3 that is connected between the heat source unit (c) and the plurality of load-side units (a, b).

5. The refrigeration cycle apparatus (100) of claim 4, wherein one of the at least two first return pipes (2a-1, 2a-2) connected to one of the plurality of load-side units (a, b) that is preset to be frequently used is connected to the return-side header (2) at a position farthest from the second return pipe (2b) among all of the at least two first return pipes (2a-1, 2a-2).

## Patentansprüche

1. Verteiler (e), umfassend:
ein auslaufseitiges Kopfstück (1), mit dem eine Vielzahl von Auslaufleitungen (1a-1, 1a-2, 1b) verbunden ist,
ein rücklaufseitiges Kopfstück (2), mit dem eine Vielzahl von Rücklaufleitungen (2a-1, 2a-2, 2b) verbunden ist; und
wobei die Vielzahl der Auslaufleitungen (1a-1, 1a-2, 1b) zumindest zwei erste Auslaufleitungen (1a-1, 1a-2), die mit einer Fluidverteilungsseite verbunden sind, und eine zweite Auslaufleitung (1b), die mit einer Fluidzuführungsseite verbunden ist, aufweist,
wobei die Vielzahl von Rücklaufleitungen (2a-1, 2a-2, 2b) zumindest zwei erste Rücklaufleitungen (2a-1, 2a-2), die mit der Fluidverteilungsseite verbunden sind, und eine zweite Rücklaufleitung (2b), die mit der Fluidzuführungsseite verbunden ist, aufweist,
wobei die zumindest zwei ersten Auslaufleitungen (1a-1, 1a-2) jeweils mit einer Pumpe (5a, 5b) versehen sind, oder die zumindest zwei ersten Rücklaufleitungen (2a-1, 2a-2) jeweils mit einer Pumpe (5a, 5b) versehen sind,
wobei das auslaufseitige Kopfstück (1) und das rücklaufseitige Kopfstück (2) so angeordnet sind, um in der longitudinalen Richtung parallel zueinander zu sein,
wobei die zweite Rücklaufleitung (2b) an einer Position verbunden ist, die näher am auslaufseitigen Kopfstück (1) liegt als die Verbindungspositionen der zumindest zwei ersten Rücklaufleitungen (2a-1, 2a-2) zum rücklaufseitigen Kopfstück (2),
wobei die zweite Auslaufleitung (1b) mit dem auslaufseitigen Kopfstück (1) zwischen Verbindungspositionen der zumindest zwei ersten Auslaufleitungen (1a-1, 1a-2) in der longitudinalen Richtung des auslaufseitigen Kopfstücks (1) verbunden ist, **dadurch gekennzeichnet, dass** die zweite Rücklaufleitung (2b) mit dem rücklaufseitigen Kopfstück (2) an einer stromabwärtigen Seite in einer Richtung, in der das aus den zumindest zwei ersten Rücklaufleitungen (2a-1, 2a-2) zurücklaufende Fluid strömt, und an einer gegenüberliegenden Seite über eine longitudinale Richtung des rücklaufseitigen Kopfstücks (2) hinweg von Verbindungspositionen der zumindest zwei ersten Rücklaufleitungen (2a-1, 2a-2) zum rücklaufseitigen Kopfstück verbunden ist, und
der Verteiler ferner eine Bypassleitung (3) umfasst, die das auslaufseitige Kopfstück (1) und das rücklaufseitige Kopfstück (2) verbindet, wobei
ein Innendurchmesser der Bypassleitung (3) kleiner ist als ein Innendurchmesser von jeder der zumindest zwei ersten Auslaufleitungen (1a-1, 1a-2), der zweiten Auslaufleitung (1b), der zumindest zwei ersten Rücklaufleitungen (2a-1, 2a-2) und der zweiten Rücklaufleitung (2b).

2. Verteiler (e) nach Anspruch 1, wobei die zumindest zwei ersten Auslaufleitungen (1a-1, 1a-2) parallel zueinander mit dem auslaufseitigen Kopfstück (1), an einer gegenüberliegenden Seite von einer Verbindungsposition der zweiten Auslaufleitung (1b) zum auslaufseitigen Kopfstück (1), verbunden sind.

3. Verteiler (e) nach Anspruch 1 oder 2, wobei die zumindest zwei ersten Rücklaufleitungen (2a-1, 2a-2) parallel zueinander mit dem rücklaufseitigen Kopfstück (2), an einer gegenüberliegenden Seite von einer Verbindungsposition der zweiten Rücklaufleitung (2b) zum rücklaufseitigen Kopfstück (2), verbunden sind.

4. Kältekreislaufvorrichtung (100), umfassend:
eine Wärmequelleneinheit (c);
eine Vielzahl von lastseitigen Einheiten (a, b); und
den Verteiler (e) nach einem der Ansprüche 1 bis 3, der zwischen der Wärmequelleneinheit (c) und der Vielzahl der lastseitigen Einheiten (a, b) verbunden ist.

5. Kältekreislaufvorrichtung (100) nach Anspruch 4, wobei eine der zumindest zwei ersten Rücklaufleitungen (2a-1, 2a-2), die mit einer der Vielzahl von lastseitigen Einheiten (a, b) verbunden ist, die voreingestellt ist, um häufig verwendet zu werden, mit dem rücklaufseitigen Kopfstück (2) an einer Position, die unter allen der zumindest zwei ersten Rücklaufleitungen (2a-1, 2a-2) von der zweiten Rücklaufleitung (2b) am weitesten entfernt ist, verbunden ist.

## Revendications

1. Distributeur (e) comprenant :
un collecteur côté sortie (1) auquel une pluralité de tuyaux de sortie (1a-1, 1a-2, 1b) sont reliés ;
un collecteur côté retour (2) auquel une pluralité de tuyaux de retour (2a-1, 2a-2, 2b) sont reliés ; et
la pluralité de tuyaux de sortie (1a-1, 1a-2, 1b) comprenant au moins deux premiers tuyaux de sortie (1a-1, 1a-2) reliés à un côté de distribution de fluide et un deuxième tuyau de sortie (1b) relié à un côté d'alimentation en fluide,
la pluralité de tuyaux de retour (2a-1, 2a-2, 2b) comprenant au moins deux premiers tuyaux de retour (2a-1, 2a-2) reliés au côté de distribution de fluide et un deuxième tuyau de retour (2b) relié au côté d'alimentation en fluide,
lesdits au moins deux premiers tuyaux de sortie (1a-1, 1a-2) étant pourvus chacun d'une pompe (5a, 5b), ou lesdits au moins deux premiers tuyaux de retour (2a-1, 2a-2) étant pourvus chacun d'une pompe (5a, 5b),
le collecteur côté sortie (1) et le collecteur côté retour (2) étant disposés de manière à être parallèles l'un à l'autre dans la direction longitudinale,
le deuxième tuyau de retour (2b) étant relié à une position plus proche du collecteur côté sortie (1) que ne le sont les positions de liaison desdits au moins deux premiers tuyaux de retour (2a-1, 2a-2) au collecteur côté retour (2),
le deuxième tuyau de sortie (1b) étant relié au collecteur côté sortie (1) entre les positions de liaison desdits au moins deux premiers tuyaux de sortie (1a-1, 1a-2) dans la direction longitudinale du collecteur côté sortie (1), **caractérisé en ce que** le deuxième tuyau de retour (2b) est relié au collecteur côté retour (2), d'un côté aval dans une direction dans laquelle le fluide revenant desdits au moins deux premiers tuyaux de retour (2a-1, 2a-2) s'écoule, et d'un côté opposé, dans une direction longitudinale du collecteur côté retour (2), des positions de liaison desdits au moins deux premiers tuyaux de retour (2a-1, 2a-2) au collecteur côté retour, et le distributeur comprend en outre un tuyau de dérivation (3) reliant le collecteur côté sortie (1) et le collecteur côté retour (2), dans lequel
un diamètre intérieur du tuyau de dérivation (3) est inférieur à un diamètre intérieur de chacun desdits au moins deux premiers tuyaux de sortie (1a-1, 1a-2), du deuxième tuyau de sortie (1b), desdits au moins deux premiers tuyaux de retour (2a-1, 2a-2), et du deuxième tuyau de retour (2b).

2. Distributeur (e) selon la revendication 1, dans lequel lesdits au moins deux premiers tuyaux de sortie (1a-1, 1a-2) sont reliés en parallèle l'un par rapport à l'autre au collecteur côté sortie (1), d'un côté opposé d'une position de liaison du deuxième tuyau de sortie (1b) au collecteur côté sortie (1).

3. Distributeur (e) selon la revendication 1 ou 2, dans lequel lesdits au moins deux premiers tuyaux de retour (2a-1, 2a-2) sont reliés en parallèle l'un par rapport à l'autre au collecteur côté retour (2), d'un côté opposé d'une position de liaison du deuxième tuyau de retour (2b) au collecteur côté retour (2).

4. Appareil à cycle de réfrigération (100) comprenant :
une unité de source de chaleur (c) ;
une pluralité d'unités côté de charge (a, b) ; et
le distributeur (e) de l'une quelconque des revendications 1 à 3 qui est relié entre l'unité de source de chaleur (c) et la pluralité d'unités côté de charge (a, b).

5. Appareil à cycle de réfrigération (100) selon la revendication 4, dans lequel l'un desdits au moins deux premiers tuyaux de retour (2a-1, 2a-2) relié à l'une de la pluralité d'unités côté de charge (a, b) qui est présélectionnée pour être fréquemment utilisée est relié au collecteur côté retour (2) à une position la plus éloignée du deuxième tuyau de retour (2b) parmi la totalité desdits au moins deux premiers tuyaux de retour (2a-1, 2a-2).
